Europäisches Patentamt

European Patent Office

Office européen des brevets

(19)

(11) Publication number: **0 400 720**
**A2**

## (12) EUROPEAN PATENT APPLICATION

(21) Application number: **90201299.6**

(22) Date of filing: **22.05.90**

(51) Int. Cl.⁵: **C08J 3/03, C08L 101/00,
//(C08L101/00,21:00)**

(30) Priority: **25.05.89 GB 8912045**

(43) Date of publication of application:
**05.12.90 Bulletin 90/49**

(84) Designated Contracting States:
**AT BE CH DE DK ES FR GB GR IT LI LU NL SE**

(71) Applicant: **SHELL INTERNATIONALE
RESEARCH MAATSCHAPPIJ B.V.**
**Carel van Bylandtlaan 30**
**NL-2596 HR Den Haag(NL)**

(72) Inventor: **Kallenbach, Rolf**
**Mülheimer Strasse 16-22**
**D-6800 Mannheim Rheinau(DE)**
Inventor: **Lepsy, Gert-Dieter**
**Mülheimer Strasse 16-22**
**D-6800 Mannheim Rheinau(DE)**

(74) Representative: **Aalbers, Onno et al**
**P.O. Box 302**
**NL-2501 CH The Hague(NL)**

(54) **Aqueous dispersions containing a polymer and a clay.**

(57) Aqueous dispersions containing a polymer and a clay, comprising at least

a) 10 - 40 pbw of an aliphatic hydrocarbon solvent-insoluble natural or synthetic resinous compound,

b) 1 - 10 pbw of an aliphatic hydrocarbon solvent-insoluble elastomeric polymer or copolymer based on one or more ethylenically unsaturated compounds, which polymer is miscible with the resinous compound under a) in the weight ratio as specified hereinbefore,

c) 0 - 30 pbw of a plasticizing compound for the resinous compound as under a),

d) 0 - 2 pbw of an adhesion-promoting compound,

e) 1 - 20 pbw of a clay-based dispersing agent, which clay has a specific surface area > 40 $m^2/g$, a quartz content < 15 % m and a cation-exchange capacity > 20 mVal/100g, and wherein the exchangeable cat ions are predominantly di- and/or trivalent.

f) 0.1 - 4 pbw of an alkali or alkaline earth metal salt, and

g) 20 - 80 pbw of water, coatings based on such dispersions and their use.

## AQUEOUS DISPERSIONS CONTAINING A POLYMER AND A CLAY

The invention relates to aqueous dispersions containing a polymer or copolymer of one or more ethylenically unsaturated compounds and, as dispersing agent a clay, and to their preparation and use.

Aqueous dispersions containing a polymer and a clay are known form German patent specification 1,294,868, wherein a process is described for the preparation of an aqueous bituminous dispersion containing a polymer or a copolymer of one or more ethylenically unsaturated compounds and as a dispersing agent, a clay. Coatings based on these dispersions solidify rapidly. Said coatings are rubbery by nature and are resistant against rain long before they are completely dry. Furthermore, once the coating is dry, it cannot be re-emulsified, not even under pressure in water. The dispersions demonstrate excellent substrate-wetting characteristics, e.g. when applied to acidic and basic ceramic and/or mineral substrates. The bituminous substance which is most suitable for use in said dispersions is coal tar pitch. However, it is expected that the use of this pitch may not always be acceptable from a physiological point of view.

The applicant has tested a number of alternative materials, which do not have such a physiological disadvantage, as a potential substitute for the bituminous compound in said known dispersion. A number of maleinated resins were tested, but the polymer of the ethylenically unsaturated compound was found to be insufficiently soluble in or miscible with said resins.

The problem underlying the present invention is finding substitutes for the bituminous compound in the hereinbefore mentioned known dispersions, which are more acceptable from a physiological point of view and which are miscible with the polymer in the desired or appropriate ratio.

As a result of continuing and extensive research and experimentation it has surprisingly been found that the bituminous compounds in the known dispersion, can be replaced with certain natural and synthetic resinous compounds, and that these compounds do not suffer from the hereinbefore mentioned physiological blemish. These resinous compounds-containing aqueous dispersions are novel, and form the main aspect of the present invention.

Accordingly, the invention provides aqueous dispersions containing a polymer and a clay, comprising

a) 10 - 40 pbw of an aliphatic hydrocarbon solvent-insoluble natural or synthetic resinous compound,

b) 1 - 10 pbw of an aliphatic hydrocarbon solvent-insoluble elastomeric polymer or copolymer based on one or more ethylenically unsaturated compounds, which polymer is miscible with the resinous compound under a) in the weight ratio as specified hereinbefore,

c) 0 - 30 pbw of a plasticizing compound for the resinous compound under a),

d) 0 - 2 pbw of an adhesion-promoting compound,

e) 1 - 20 pbw of a clay-based dispersing agent, which has a specific surface area >40 $m^2/g$, a quartz content <15 % m and a cation-exchange capacity > 20 mVal/100g, and wherein the exchangeable cations are predominantly di- and/or trivalent,

f) 0.1 - 4 pbw of an alkali or alkaline earth metal salt, and

g) 20 - 80 pbw of water.

It will be appreciated by persons skilled in the art that these compositions are environmentally more acceptable than the compositions of the prior art discussed.

The nature of the natural resinous compound present in the dispersion of the present invention is not critical and may originate from any natural source, such as a vegetable or mineral source, provided it meets the hereinbefore mentioned requirements regarding the insolubility in aliphatic hydrocarbons. Preferred such resinous compounds of vegetable origin are rosins and rosin derivative type of resinous compounds. Especially preferred rosins are wood rosin type products available under the trade name VINSOL, being dark, high-melting, thermoplastic resins derived from southern pine stumpwood. Suitable synthetic resinous compounds, i.e. those which are insoluble in aliphatic hydrocarbon solvents, may be obtained by polymerization of unsaturated hydrocarbon compounds. Synthetic resinous compounds which may advantageously be used in the dispersions of the present invention include selected coumarone-indene resins i.e. petrol-resistant coumarone-indene resins having a Krämer-Sarnow softening point in the range of from 15-95 °C.

Depending on the nature of the resins to be employed, as well as on their physical characteristics, such resins may be used as such or in combination with a plasticizing compound. Plasticizing compounds which may be used include esters, e.g. alkyl esters of aliphatic and aromatic carboxylic and sulfonic acids as well as of phosphoric and phosphonic acids. Plasticizing compounds which are especially preferred are high-boiling residual aromatic oils, a suitable representative of these oil-type products being tar oil. The ratio wherein such a plasticizing compound may be used may vary strongly and will be amongst others related to the nature of the resinous compound, to the nature of the plasticizing compound and to the requirements of the coatings based on said dispersions.

The hereinbefore mentioned elastomeric polymers which may be present in the dispersions of the present invention may include polymers based on one or more ethylenically unsaturated compounds as well as copolymers of such ethylenically unsaturated compounds, with conjugated dienes. Examples of suitable polymeric compounds include polyacrylonitriles, polyvinylesters, polychloroprenes, polybutadiene, styrene-acrylonitrile copolymers, butadiene-acrylonitrile copolymers, and styrene-butadiene copolymers. Butadiene-acrylonitrile copolymers being preferred.

As mentioned hereinbefore the polymer should be miscible with the resinous compound present in the dispersion. It will be appreciated that, depending on the nature of the polymer and of the resinous compound, their miscibility or compatibility may be enhanced by the presence of a suitable plasticizing compound or by the presence of specific amounts of such compounds, with respect to the amount of polymer and/or resin present. Moreover it will be appreciated that the compatibility of said compounds may be enhanced by the presence of a further non-plasticizing compound, e.g. a suitable polymeric or resinous compound which can act as a compatibilizer, in which case such compound may advantageously be included in the composition of the dispersion.

The dispersions of the present invention will primarily be used for coating purposes, which form another aspect of the present invention. In connection therewith it is very important that such coatings demonstrate good substrate-adhesion. Should this performance characteristic not always be sufficient to meet specific requirements, appropriate amounts of one or more adhesion-promoting compounds may advantageously be included in the composition of these dispersions. The nature of such adhesion-promoting compounds will of course be related to the nature of the other binder components present, i.e. the polymer, resin and/or plasticizing compounds. Adhesion-promoting compounds which may suitably be used in the dispersions of the present invention include solid, semi-solid and liquid cationic amides derived from natural or synthetic acids, such as fatty acids. Preferred adhesion-promoting compounds are such amides based on tall oil fatty acids or fish oil fatty acids. In the context of the present invention the term "fish oil" refers to products as described under the heading "Fischöle" in Römpps Chemie Lexikon, Vol 2. p 1295.

Generally such compounds will be present in an amount of from 0.1 to 1 %m (mass) calculated on the combined weight of rubber resin and plasticizing compound, hereinafter referred to as binder weight.

The amount of clay-based dispersing agent which will be present in the dispersions of the present invention will be more or less similar to that of the dispersions described in German patent specification 1294868, the contents of which is incorporated herein by way of reference. Hence the amount of said clay will generally comprise up to 25 % m of the binder weight. Preferably said amount of clay will be in the range of from 4-15 % m of the weight of total binder.

$CaCl_2$ is a preferred alkaline earth metal salt to be used in the composition of the present invention.

The water content of the dispersions will generally be in the range of from 40 to 60 % m of the total weight of the dispersion. When desired the dispersion may further include auxiliary compounds. In addition to inorganic compounds such as pigments, fillers, extenders and stabilisers, such as antioxidants, the presence of which may be dictated by specific enduses, the dispersion may also include agents which promote the quality or the performance properties of the dispersion. Such compounds include thickening agents and/or anti settling agents. A bentonite type clay in combination with an alcohol such as ethanol is a preferred thickening or anti settling agent.

Similarly to what has been described in German patent specification 1294868 there are in principle several methods available for the preparation of the dispersions of the present invention. However, one method is preferred in view of the superior performance properties which can be obtained with the coatings based on these dispersions prepared according to said preferred method. Said method comprises adding, under stirring, the polymer compound in powder form or as an aqueous dispersion to the molten resinous compound or to the molten intimate mixture of said resinous compound and the plasticizing compound, and continuing the stirring until a more or less homogeneous mixture is obtained, which mixture is almost immediately converted to a stable dispersion with the addition of the aqueous dispersion of clay, which dispersion also contains the alkali or alkaline earth metal salt. The binder content of the aqueous polymer dispersion will generally be in the range of from 40 to 60 % m.

The coatings based on the dispersions of the present invention are characterised by a good petrol resistance and outdoor durability. Accelerated weathering tests have indicated that under such test conditions the performance of the coatings based on the present dispersions is at least equal to if not better than that of coatings based on the bituminous compounds-containing dispersions of the prior art. The dispersion of the present invention may be advantageously used e.g. as the topcoat of airport landingstrips, as well as in the road building industry.

It will be appreciated that the invention is also relating to the use of coatings derived from the dispersions as hereinbefore specified.

The invention will be further illustrated by the following examples for which the following information is provided, without restricting the scope to the specific embodiments:

1) Vinsol (trade name) a dark high-melting, aliphatic hydrocarbon-insoluble, thermoplastic resin, derived from southern pine stumpwood (ex Hercules Inc.); having a softening point of 110-130 °C as determined according to the Hercules drop method employing a bath temperature of 135 °C.

2) Anthracene oil, a filtered high boiling fraction derived from coal tar via fractional distillation and separation.

3) Perbunan N 3810 (trade name), a butadiene-acrylonitrile elastomeric copolymer, ex Bayer A.G.

4) Adhesion promoter: Fish oil fatty acid amide as defined hereinbefore, ex Th. Goldschmidt A.G.

5) A commercial clay having a specific surface urea 65 m²/g, a quartz content 10% m, a cation-exchange capacity 29 mVal/100g, exchangeable cations comprise approximately Na: 2%, K: 2% and Mg + Ca: 96% ex Riedel de Haen.

6) Inden-Cumaronharz B 1/55 A; Krämer-Sarnow soft point 55 °C, ex Rütgerswerke A.G.

7) Hydrocarbon resin, high boiling, ex Rütgerswerke A.G.

8) CaCl₂, employed as 95% pure material.

## EXAMPLE I

Powdered Perbunan N 3810 (5.4 kg) and 0.2 kg fish oil fatty acid amide were added under stirring to a molten mixture of Vinsol (50.4 kg) and Anthracene oil (44.0 kg) at a temperature of 150 °C. After stirring for approximately 75 min. a homogeneous mixture was obtained. Subsequently said hot mixture (46.8 kg) added to an aqueous clay dispersion (6.0 kg clay, 0.12 kg CaCl₂ and 47.08 kg water) and mixed with the aid of a dissolver for about 30 min.

## EXAMPLE II

The procedure as described in Example I was repeated with the exception that the clay dispersion comprised 6.0 kg clay, 2 kg Bentonit, 2 kg ethanol, 0.1 kg CaCl₂ and 43.1 kg water.

## EXAMPLE III

The procedure of Example I was repeated with the exception that the Vinsol was replaced with the Inden-Cumaron harz B 1/55A, and 44.0 kg of the binder mixture was added to a dispersion comprising 7.6 kg clay, 0.1 kg CaCl₂ and 47.4 kg water.

## EXAMPLE IV

The procedure of Example I was repeated with the exception that the Vinsol and the anthracene oil were replaced with 94 kg of the hydrocarbon resin, and 44.2 kg of the binder mixture was added to a dispersion comprising 6.3 kg clay, 0.1 kg CaCl₂ and 49.4 Kg water.

Artificial weathering tests during 1000 hours indicated that the coatings of the present invention were at least equal to if not better than those of the corresponding bitumen-based coatings.

## Claims

1. Aqueous dispersions containing a polymer and a clay, comprising at least

a) 10 - 40 pbw of an aliphatic hydrocarbon solvent-insoluble natural or synthetic resinous compound,

b) 1 - 10 pbw of an aliphatic hydrocarbon solvent-insoluble elastomeric polymer or copolymer based on one or more ethylenically unsaturated compounds, which polymer is miscible with the resinous compound under a) in the weight ratio as specified hereinbefore,

c) 0 - 30 pbw of a plasticizing compound for the resinous compound as under a),

d) 0 - 2 pbw of an adhesion-promoting compound,

e) 1 - 20 pbw of a clay-based dispersing agent, which clay has a specific surface area > 40 m²/g, a quartz content < 15 % m and a cation-exchange capacity 20 mVal/100g, and wherein the exchange able cations are predominantly di- and/or trivalent.

f) 0.1 - 4 pbw of an alkali or alkaline earth metal salt, and

g) 20 - 80 pbw of water.

2. Dispersions as claimed in claim 1, wherein the natural resinous compound is a rosin or rosin derivative.

3. Dispersions as claimed in claim 2, wherein the rosin is a wood rosin type product available under the trade name Vinsol.

4. Dispersions as claimed in claim 1, wherein the synthetic resinous compound is a petrol-resistant coumarone-indene resin having a Krämer-Sarnow softening point in the range of from 15-95 °C.

5. Dispersions as claimed in any one of claims 1-4, wherein the plasticizing compound is a high-boiling residual aromatic oil.

6. Dispersions as claimed in claim 5, wherein the aromatic oil is an anthracene oil having a boiling point of at least 200 °C.

7. Dispersions as claimed in any one of claims 1-6, wherein the polymer is a butadiene-acrylonitrile copolymer.

8. Dispersions as claimed in any one of claims 1-7, wherein the amount of clay-type dispersing agent comprises of from 4-15 % m calculated on weight of total binder.

9. Dispersions as claimed in any one of claims 1-8, wherein in the adhesion-promoting compound is a fatty acid amide compound.

10. Dispersions as claimed in any one of claims 1-9, wherein the alkaline earth metal salt is $CaCl_2$.

11. A process for the preparation of dispersions as claimed in any one of claims 1-10, which comprises adding, with stirring, the polymer compound to the molten resinous compound or to the intimate mixture of said molten resinous compound and the plasticizing compound, and continuing the stirring until a more or less homogeneous mixture is obtained, which mixture is almost immediately converted into a stable dispersion with the addition of the aqueous dispersion of clay, which dispersion also contains the alkali or alkaline earth metal salt.

12. Coatings whenever based on aqueous dispersions as claimed in any one of claims 1-10.

13. The use of coatings based on aqueous dispersions as claimed in claim 12.